# EUROPÄISCHE PATENTSCHRIFT

(11) **EP 3 913 272 B1**
(45) Veröffentlichungstag und Bekanntmachung des Hinweises auf die Patenterteilung: **22.02.2023**
(21) Anmeldenummer: 20175716.8
(22) Anmeldetag: 20.05.2020
(51) Int. Cl.: F16L 37/088

(54) **VERBINDER ZUM VERBINDEN ZWEIER FLUIDFÜHRENDER ELEMENTE**
CONNECTOR FOR CONNECTION BETWEEN TWO FLUID-CONVEYING ELEMENTS
DISPOSITIF DE RACCORDEMENT PERMETTANT DE RACCORDER DEUX ÉLÉMENTS FLUIDES

(43) Veröffentlichungstag der Anmeldung: 24.11.2021
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Knobloch, Harald, 69121 Heidelberg (DE); Rohde, Reiner, 34323 Malsfeld (DE)
(74) Vertreter: Andrejewski - Honke Patent- und Rechtsanwälte Partnerschaft mbB

(56) Entgegenhaltungen:
- EP-A1- 2 644 957
- EP-A1- 3 388 727
- DE-C1- 10 125 499

## Beschreibung

Die Erfindung betrifft einen Verbinder zum Verbinden zweier fluidführender Elemente, insbesondere zum Verbinden von zwei Kraftfahrzeugrohrleitungen mit einem weiblichen Steckteil und einem in das weibliche Steckteil einsteckbaren männlichen Steckteil, wobei an dem weiblichen Steckteil ein Rückhalter angeschlossen ist, mit dem das männliche Steckteil an dem weiblichen Steckteil fixierbar ist. Bei dem erfindungsgemäßen Verbinder handelt es sich vorzugsweise um einen VDA-Verbinder (VDA-Standard) oder um einen SAE-Verbinder (SAE-Standard). Es liegt im Rahmen der Erfindung, dass der erfindungsgemäße Verbinder ein Schnellverbinder bzw. Quick-Connector ist. Gemäß einer bevorzugten Ausführungsform wird der Verbinder zum Verbinden zweier Rohrleitungen, insbesondere zweier Kraftfahrzeugrohrleitungen eingesetzt.

Verbinder der vorstehend beschriebenen Art sind aus der Praxis in unterschiedlichen Ausführungsformen grundsätzlich bekannt. Insbesondere bei der Verwendung derartiger Verbinder zum Verbinden von zwei Kraftfahrzeugrohrleitungen hat sich gezeigt, dass aufgrund der teilweise komplizierten Montage und einem hohen Kraftaufwand beim Verbinden des männlichen und des weiblichen Steckteils häufig Verbindungsfehler resultieren. Solche Verbindungsfehler treten beispielsweise auf, wenn das männliche Steckteil durch unvollständige Montage nicht ordnungsgemäß und korrekt an dem weiblichen Steckteil fixiert ist, sodass die Verbindung nicht funktionssicher und dicht ist. Dies ist insbesondere dann der Fall, wenn bei der Montage nicht zuverlässig und eindeutig erkennbar ist, ob die Verbindung zwischen männlichem und weiblichem Steckteil ordnungsgemäß hergestellt wurde. Durch derartige Verbindungsfehler können Leckagen entstehen, bei denen unerwünscht Fluide bzw. Flüssigkeiten wie Kraftstoff, Kühlmittel und dergleichen austreten. Um diesem Problem entgegenzuwirken sind Verbinder mit Einrichtungen zur Anzeige der korrekten Verbindung zwischen männlichem und weiblichem Steckteil aus der Praxis und aus dem Stand der Technik bekannt. EP 2 644 957 A1 beschreibt in diesem Zusammenhang eine Steckverbindungsanordnung zum lösbaren Verbinden von Fluidleitungen, umfassend eine Anschlussleitung und ein daran beweglich gelagertes Anschlusselement. Das Anschlusselement weist einen Fortsatz auf, der die korrekte Endmontageposition des Anschlusselementes anzeigt. DE 101 25 499 C1 offenbart eine Steckverbindung für Rohrleitungen mit einem Innenteil, einem Außenteil und einer Zentrierhülse, die im unfixierten Zustand des Innenteils einen Haltering blockiert und diesen Haltering beim Einstecken des Innenteils in das Außenteil freigibt. Viele dieser Verbinder sind aber komplex aufgebaut und nur mit hohem Fertigungsaufwand bzw. hohen Produktionskosten herstellbar. Darüber hinaus treten zumindest bei einigen bekannten Verbindern weiterhin Verbindungsfehler auf, weil die ordnungsgemäße Montage bzw. Verbindung zwischen den Steckteilen nicht mit ausreichender Zuverlässigkeit angezeigt wird. Fernerhin ist der bei der Verbindung von männlichem und weiblichem Steckteil nötige Kraftaufwand in diesem Zusammenhang problematisch und trägt ebenfalls zur Störanfälligkeit bei der Montage bei. - Insoweit besteht Verbesserungsbedarf.

Demgegenüber liegt der Erfindung das technische Problem zugrunde, einen Verbinder der eingangs genannten Art anzugeben, mit dem einfach und funktionssicher Verbindungsfehler bei der Verbindung von männlichem und weiblichem Steckteil vermieden werden können und bei dem insbesondere die korrekte und funktionssichere Verbindung von männlichem und weiblichem Steckteil zuverlässig und eindeutig angezeigt wird.

Zur Lösung dieses technischen Problems lehrt die Erfindung einen Verbinder zum Verbinden zweier fluidführender Elemente, insbesondere zum Verbinden von zwei Kraftfahrzeugrohrleitungen mit einem weiblichen Steckteil und einem in das weibliche Steckteil einsteckbaren männlichen Steckteil, wobei an dem weiblichen Steckteil ein Rückhalter angeschlossen ist, mit dem das männliche Steckteil an dem weiblichen Steckteil fixierbar ist, wobei der Rückhalter im unfixierten Zustand des männlichen Steckteils von einer in dem weiblichen Steckteil vorgesehenen Verifikationshülse blockiert ist, wobei beim Einstecken des männlichen Steckteils in das weibliche Steckteil die Verifikationshülse axial in Einsteckrichtung verschoben wird, sodass der Rückhalter freigegeben wird und das männliche Steckteil an dem weiblichen Steckteil fixiert. Gemäß einer erfindungsgemäßen Lösung ist der Verbinder dadurch gekennzeichnet, dass das weibliche Steckteil zumindest ein Verifikationsfenster aufweist, durch das zumindest ein Teil der - insbesondere farbig ausgebildeten - Verifikationshülse im unfixierten Zustand des männlichen Steckteils sichtbar ist und wobei die Verifikationshülse im fixierten Zustand bzw. im vollständig eingesteckten Zustand des männlichen Steckteils durch das Verifikationsfenster nicht mehr sichtbar ist bzw. im Wesentlichen nicht mehr sichtbar ist.

Gemäß einer weiteren erfindungsgemäßen Lösung ist der Verbinder dadurch gekennzeichnet, dass das weibliche Steckteil zumindest ein Verifikationsfenster aufweist, durch das die - insbesondere farbig ausgebildete - Verifikationshülse im unfixierten Zustand des männlichen Steckteils noch nicht sichtbar ist bzw. im Wesentlichen noch nicht sichtbar ist und wobei zumindest ein Teil der Verifikationshülse im fixierten Zustand bzw. im vollständig eingesteckten Zustand des männlichen Steckteils durch das Verifikationsfenster sichtbar ist.

Gemäß einer weiteren erfindungsgemäßen Lösung ist der Verbinder dadurch gekennzeichnet, dass das weibliche Steckteil zumindest ein Verifikationsfenster aufweist, durch das zumindest ein Teil der Verifikationshülse im unfixierten Zustand des männlichen Steckteils sichtbar ist und wobei im fixierten Zustand bzw. im vollständig eingesteckten Zustand des männlichen Steckteils ebenfalls zumindest ein Teil bzw. ein anderer Teil der Verifikationshülse durch das Verifikationsfenster sichtbar ist und wobei die Verifikationshülse dabei zumindest zwei Farbbereiche bzw. Farbabschnitte mit unterschiedlichen Farbtönen aufweist.

Gemäß empfohlener Ausführungsform des erfindungsgemäßen Verbinders ist das männliche Steckteil und/oder das weibliche Steckteil auf Basis zumindest eines Kunststoffes ausgebildet. Bevorzugt besteht das männliche Steckteil und/oder das weibliche Steckteil aus zumindest einem Kunststoff bzw. im Wesentlichen aus zumindest einem Kunststoff. Besonders bevorzugt besteht das männliche Steckteil und/oder das weibliche Steckteil aus zumindest einem Kunststoff bzw. im Wesentlichen aus zumindest einem Kunststoff ausgewählt aus der Gruppe "aliphatisches Polyamid, aromatisches Polyamid, Polyphenylensulfid (PPS)". Grundsätzlich liegen aber auch andere Kunststoffe als Material für das männliche Steckteil und/oder das weibliche Steckteil im Rahmen der Erfindung, wie beispielsweise Polyurethan und/oder Polyolefine, insbesondere Polypropylen. Es ist auch möglich, dass das männliche Steckteil und das weibliche Steckteil aus unterschiedlichen Kunststoffen hergestellt sind. Vorzugsweise sind das männliche Steckteil und das weibliche Steckteil auf Basis des gleichen Kunststoffes hergestellt und bevorzugt bestehen das männliche Steckteil und das weibliche Steckteil aus dem gleichen Kunststoff bzw. im Wesentlichen aus dem gleichen Kunststoff.

Der erfindungsgemäße Rückhalter besteht gemäß einer bevorzugten Ausführungsvariante der Erfindung aus zumindest einem Metall bzw. im Wesentlichen aus zumindest einem Metall. Es hat sich bewährt, dass der Rückhalter aus Stahl bzw. im Wesentlichen aus Stahl besteht. Gemäß einer alternativen Ausführungsform der Erfindung besteht der Rückhalter aus zumindest einem Kunststoff bzw. im Wesentlichen aus zumindest einem Kunststoff, beispielsweise aus einem Polyamid und/oder aus Polyphenylensulfid.

Erfindungsgemäß ist mit dem Rückhalter das männliche Steckteil an dem weiblichen Steckteil fixiert. Im unfixierten Zustand des männlichen Steckteils ist der Rückhalter von der erfindungsgemäßen Verifikationshülse blockiert. Unfixierter Zustand des männlichen Steckteils meint im Rahmen der Erfindung insbesondere den Zustand, in dem das männliche Steckteil noch nicht in das weibliche Steckteil eingesteckt ist bzw. noch nicht vollständig in das weibliche Steckteil eingesteckt ist. Beim Einstecken des männlichen Steckteils in das weibliche Steckteil wird erfindungsgemäß die Verifikationshülse axial in Einsteckrichtung verschoben, sodass der Rückhalter freigegeben wird und das männliche Steckteil anschließend von dem Rückhalter an dem weiblichen Steckteil fixiert wird.

Eine besonders bevorzugte Ausführungsform der Erfindung ist dadurch gekennzeichnet, dass das weibliche Steckteil zumindest eine Rückhalterausnehmung aufweist, die im unfixierten Zustand des männlichen Steckteils von der Verifikationshülse blockiert ist und wobei der Rückhalter im fixierten Zustand des männlichen Steckteils die zumindest eine Rückhalterausnehmung durchgreift bzw. vollständig durchgreift. Empfohlenermaßen weist das weibliche Steckteil zwei gegenüberliegende Rückhalterausnehmungen auf, die vorzugsweise als Rückhalterschlitze ausgebildet sind. Dieser Ausführungsform liegt die Erkenntnis zugrunde, dass der Rückhalter im unfixierten Zustand des männlichen Steckteils die Rückhalterausnehmungen aufgrund der Blockierung durch die Verifikationshülse noch nicht durchgreift bzw. noch nicht vollständig durchgreift und erst bei der Freigabe aufgrund der Verschiebung der Verifikationshülse die Rückhalterausnehmungen vollständig durchgreift und das männliche Steckteil auf diese Weise an dem weiblichen Steckteil fixiert. Dadurch wird unter anderem in vorteilhafter Weise der Kraftaufwand beim Einsteckvorgang reduziert, da der Rückhalter vorzugsweise durch die Verifikationshülse gleichsam vorgespannt ist und nach der axialen Verschiebung der Verifikationshülse zunächst in Einsteckrichtung beim Einsteckvorgang des männlichen Steckteils zweckmäßigerweise die zumindest eine Rückhalterausnehmung durchgreifend bzw. vollständig durchgreifend einschnappt. Fixierter Zustand des männlichen Steckteils meint im Übrigen im Rahmen der Erfindung den Zustand, in dem das männliche Steckteil vollständig in das weibliche Steckteil eingesteckt und durch den Rückhalter an dem weiblichen Steckteil fixiert ist.

Die erfindungsgemäße Verifikationshülse besteht zweckmäßigerweise aus Kunststoff bzw. im Wesentlichen aus Kunststoff. Vorzugsweise ist die Verifikationshülse einstückig ausgebildet und ist insbesondere ein einstückiges Kunststoffbauteil. Es empfiehlt sich, dass die Verifikationshülse als zumindest bereichsweise bzw. abschnittsweise hohlzylindrisches und/oder kegelstumpfförmiges Bauteil ausgestaltet ist, das sich bevorzugt zumindest bereichsweise bzw. abschnittsweise in Einsteckrichtung des männlichen Steckteils verjüngt. Es liegt im Rahmen der Erfindung, dass die Verifikationshülse mit Ausnahme ihrer beiden Hülsenöffnungen keine weiteren Öffnungen oder Ausnehmungen und dergleichen aufweist.

Gemäß bevorzugter Ausführungsform der Erfindung ist die Verifikationshülse durch direkten Kontakt des männlichen Steckteils mit der Verifikationshülse axial in Einsteckrichtung verschiebbar und dabei wird vorzugsweise das männliche Steckteil zumindest bereichsweise bzw. abschnittsweise in die Verifikationshülse eingeschoben. Empfohlenermaßen umgibt die Verifikationshülse im fixierten Zustand des männlichen Steckteils somit zumindest bereichsweise bzw. abschnittsweise das männliche Steckteil.

Es liegt im Rahmen der Erfindung, dass das männliche Steckteil eine Schrägfläche aufweist, die beim Einsteckvorgang mit einer Komplementärschrägfläche der Verifikationshülse wechselwirkt bzw. an dieser angreift und die Verifikationshülse dadurch axial in Einsteckrichtung verschiebt, sodass der Rückhalter freigegeben wird. Zweckmäßigerweise ist die Schrägfläche an der Außenseite des männlichen Steckteils angeordnet und vorzugsweise einstückig an dem männlichen Steckteil angeformt. Die Komplementärschrägfläche der Verifikationshülse bildet gemäß bevorzugter Ausführungsform zumindest bereichsweise bzw. abschnittsweise die Innenoberfläche der Verifikationshülse. Es empfiehlt sich, dass das männliche Steckteil beim Einsteckvorgang in eine Steckausnehmung des weiblichen Steckteils einsteckbar ist und dass die vorzugsweise vorgesehene Schrägfläche des männlichen Steckteils im Zuge dieses Einsteckvorgangs bevorzugt an eine Komplementärschrägfläche der Verifikationshülse herangeführt wird und besonders bevorzugt zur Anlage an diese Komplementärschrägfläche gebracht wird und beim weiteren Einstecken des männlichen Steckteils in das weibliche Steckteil die Verifikationshülse zweckmäßigerweise axial in Einsteckrichtung verschiebt, sodass der Rückhalter freigegeben wird.

Empfohlenermaßen steigt die Schrägfläche des männlichen Steckteils und/oder die Komplementärschrägfläche der Verifikationshülse in axialer Richtung des männlichen Steckteils bzw. der Verifikationshülse an. Vorzugsweise steigt die Schrägfläche des männlichen Steckteils und/oder die Komplementärschrägfläche der Verifikationshülse entgegen der Einsteckrichtung des männlichen Steckteils an. Axiale Richtung des männlichen Steckteils meint im Rahmen der Erfindung insbesondere die Richtung der Längsachse des männlichen Steckteils. Axiale Richtung der Verifikationshülse meint im Rahmen der Erfindung insbesondere die Richtung der die beiden Hülsenöffnungen durchlaufenden Längsachse bzw. Längsmittelachse der Verifikationshülse. Es hat sich bewährt, dass die Schrägfläche und/oder die Komplementärschrägfläche um 10° bis 60°, vorzugsweise um 15° bis 50°, bevorzugt um 20° bis 45° bezüglich der Längsachse bzw. Längsmittelachse des männlichen Steckteils bzw. der Verifikationshülse ansteigt. Längsachse der Verifikationshülse meint dabei insbesondere die durch die beiden Hülsenöffnungen verlaufende Längsmittelachse der Verifikationshülse. Es empfiehlt sich, dass der Anstiegswinkel der Schrägfläche des männlichen Steckteils und der Komplementärschrägfläche der Verifikationshülse identisch ist bzw. im Wesentlichen identisch ist.

Es liegt im Rahmen der Erfindung, dass die Schrägfläche den Umfang des männlichen Steckteils umläuft. Gemäß empfohlener Ausführungsform umläuft die Schrägfläche den Umfang des männlichen Steckteils um zumindest 50 %, vorzugsweise um zumindest 60 %, bevorzugt um zumindest 75 % und besonders bevorzugt um zumindest 90 %. Ganz besonders bevorzugt umläuft die Schrägfläche den Umfang des männlichen Steckteils vollständig. Zweckmäßigerweise ist die Schrägfläche als Rampe ausgebildet, die entgegen der Einsteckrichtung des männlichen Steckteils in axialer Richtung des männlichen Steckteils ansteigt. Es hat sich bewährt, dass die Schrägfläche des männlichen Steckteils und/oder die Komplementärschrägfläche der Verifikationshülse kontinuierlich und insbesondere stufenfrei ansteigt.

Gemäß einer besonders bevorzugten Ausführungsform der Erfindung hintergreift der Rückhalter im vollständig eingesteckten bzw. fixierten Zustand des männlichen Steckteils einen Anschlagflansch des männlichen Steckteils. Besonders bevorzugt greift der Rückhalter im vollständig eingesteckten bzw. fixierten Zustand des männlichen Steckteils in eine Fixierungsnut des männlichen Steckteils ein. Die Fixierungsnut umläuft den Umfang des männlichen Steckteils vorzugsweise um zumindest 80 %, bevorzugt um zumindest 90 %, besonders bevorzugt um zumindest 95 %. Gemäß einer bevorzugten Ausführungsform umläuft die Fixierungsnut den Umfang des männlichen Steckteils vollständig bzw. im Wesentlichen vollständig.

Eine besonders empfohlene Ausführungsform der Erfindung zeichnet sich dadurch aus, dass der Rückhalter U-förmig mit einem U-Bügel und zwei an dem U-Bügel angeschlossenen U-Schenkeln ausgeführt ist. Im vollständig eingesteckten bzw. fixierten Zustand des männlichen Steckteils durchgreifen die U-Schenkel vorzugsweise jeweils eine Rückhalterausnehmung des weiblichen Steckteils bzw. durchgreifen diese vollständig. Sehr bevorzugt hintergreifen die U-Schenkel dabei den Anschlagflansch des männlichen Steckteils und ganz besonders bevorzugt greifen die U-Schenkel in die Fixierungsnut des männlichen Steckteils ein. Es empfiehlt sich, dass die beiden U-Schenkel federelastisch an dem U-Bügel angeschlossen sind.

Es ist bevorzugt, dass die vorzugsweise federelastisch ausgebildeten U-Schenkel im unfixierten Zustand des männlichen Steckteils die Rückhalterausnehmungen, die vorzugsweise als zwei gegenüberliegende Rückhalterschlitze ausgebildet sind, nicht bzw. nicht vollständig durchgreifen, weil die U-Schenkel und die Rückhalterausnehmungen durch die Verifikationshülse blockiert sind. Zweckmäßigerweise gibt die Verifikationshülse durch ihre axiale Verschiebung in Einsteckrichtung im Zuge des Einsteckvorganges des männlichen Steckteils den Rückhalter bzw. die Rückhalterausnehmungen frei, sodass bevorzugt die U-Schenkel des Rückhalters die Rückhalterausnehmungen bzw. Rückhalterschlitze des weiblichen Steckteils durchgreifen bzw. vollständig durchgreifen und insbesondere in diese Rückhalterausnehmungen bzw. Rückhalterschlitze einschnappen. Dann hintergreifen die U-Schenkel zweckmäßigerweise den Anschlagflansch des männlichen Steckteils und greifen besonders bevorzugt in dessen Fixierungsnut ein. In diesem Zustand ist das männliche Steckteil vollständig bzw. ordnungsgemäß an dem weiblichen Steckteil fixiert.

Grundsätzlich kann die gemäß bevorzugter Ausführungsform an dem männlichen Steckteil vorgesehene Schrägfläche ein einstückig an das männliche Steckteil angeformtes Bauteil sein, das ansonsten keine Funktion im Zusammenhang mit der Verbindung zwischen den beiden Steckteilen erfüllt und lediglich für die Wechselwirkung mit bzw. den Angriff an der Komplementärschrägfläche der Verifikationshülse im Zuge des Einsteckvorganges vorgesehen ist. Bevorzugt weist die Schrägfläche aber auch den Anschlagflansch für den Rückhalter auf bzw. bildet die Schrägflächenrückseite den Anschlagflansch für den Rückhalter. Zweckmäßigerweise ist der Anschlagflansch in Einsteckrichtung des männlichen Steckteils vor der Schrägfläche angeordnet. Dieser Ausführungsform liegt die Erkenntnis zugrunde, dass die Schrägfläche sowohl zur Wechselwirkung mit bzw. zum Angriff an der Komplementärschrägfläche der Verifikationshülse vorgesehen ist, als auch den Anschlagflansch für den Rückhalter bildet bzw. aufweist. Dies ist im Rahmen der Erfindung besonders vorteilhaft.

Gemäß einer alternativen Ausführungsform des erfindungsgemäßen Verbinders ist an dem männlichen Steckteil, vorzugsweise den Umfang des männlichen Steckteils vollständig umlaufend, ein Bund vorgesehen, dessen Seitenflächen sich im Wesentlichen vertikal bzw. rechtwinklig zur Oberfläche des männlichen Steckteils erstrecken. Es liegt im Rahmen der Erfindung, dass der Bund des männlichen Steckteils im fixierten Zustand des männlichen Steckteils von dem Rückhalter hintergriffen wird und somit den Anschlagflansch des männlichen Steckteils bildet bzw. aufweist. Zweckmäßigerweise ist die Verifikationshülse im Rahmen einer solchen Ausführungsform derart ausgebildet, dass sie eine zu dem Bund komplementär ausgebildete Angriffsfläche aufweist, an der der Bund beim Einstecken des männlichen Steckteils in das weibliche Steckteil angreift bzw. mit der der Bund wechselwirkt und so die Verifikationshülse axial in Einsteckrichtung verschiebt, sodass der Rückhalter freigegeben wird und den Bund des männlichen Steckteils bzw. den von dem Bund gebildeten Anschlagflansch hintergreifen kann. Dann ist das männliche Steckteil vollständig und ordnungsgemäß an dem weiblichen Steckteil fixiert. Im Rahmen einer solchen Ausführungsform, bei der das männliche Steckteil vorzugsweise einen Bund aufweist, besteht der Rückhalter im Übrigen bevorzugt aus zumindest einem Kunststoff bzw. im Wesentlichen aus zumindest einem Kunststoff, insbesondere aus einem Polyamid und/oder aus Polyphenylensulfid.

Nach einer besonders bevorzugten Ausführungsform der Erfindung ist die Verifikationshülse zumindest bereichsweise bzw. abschnittsweise farbig ausgebildet. Vorzugsweise unterscheidet sich die Verifikationshülse in ihrem Farbton von den übrigen Verbinderkomponenten und insbesondere von dem weiblichen Steckteil. Es liegt im Rahmen der Erfindung, dass sich die Verifikationshülse in ihrem Farbton von dem Farbton des weiblichen Steckteils und/oder des männlichen Steckteils unterscheidet. Gemäß einer bevorzugten Ausführungsform kann die Verifikationshülse zumindest bereichsweise, vorzugsweise vollständig aus einem farbigen Kunststoff, beispielsweise aus einem rotfarbenen Kunststoff hergestellt sein und die übrigen Verbinderkomponenten - insbesondere das weibliche Steckteil - sind dann beispielsweise aus einem schwarzen und/oder einem grauen und/oder einem weißen Kunststoff hergestellt. Die einzelnen Verbinderkomponenten können dabei auch untereinander unterschiedliche Farbtöne aufweisen. Wesentlich ist im Zusammenhang mit dieser Ausführungsform, dass sich der Farbton der Verifikationshülse zumindest von dem Farbton des weiblichen Steckteils unterscheidet und bevorzugt von dem Farbton bzw. den Farbtönen der übrigen Verbinderkomponenten unterscheidet.

Erfindungsgemäß weist das weibliche Steckteil zumindest ein Verifikationsfenster auf. Durch das zumindest eine Verifikationsfenster ist nach einer erfindungsgemäßen Lösung zumindest ein Teil der - insbesondere farbig ausgebildeten - Verifikationshülse im unfixierten Zustand des männlichen Steckteils sichtbar und die Verifikationshülse ist im fixierten Zustand bzw. im vollständig eingesteckten Zustand des männlichen Steckteils durch das Verifikationsfenster nicht mehr sichtbar bzw. im Wesentlichen nicht mehr sichtbar. Nach einer weiteren erfindungsgemäßen Lösung weist das weibliche Steckteil zumindest ein Verifikationsfenster auf, durch das die - insbesondere farbig ausgebildete - Verifikationshülse im unfixierten Zustand des männlichen Steckteils noch nicht sichtbar ist bzw. im Wesentlichen noch nicht sichtbar ist und wobei zumindest ein Teil der Verifikationshülse im fixierten Zustand bzw. im vollständig eingesteckten Zustand des männlichen Steckteils durch das Verifikationsfenster sichtbar ist.

Nach einer weiteren erfindungsgemäßen Lösung ist im unfixierten Zustand des männlichen Steckteils durch zumindest ein Verifikationsfenster zumindest ein Teil der insbesondere farbig ausgebildeten Verifikationshülse sichtbar und im fixierten Zustand bzw. im vollständig eingesteckten Zustand des männlichen Steckteils ist ebenfalls zumindest ein Teil bzw. ein anderer Teil der Verifikationshülse durch das Verifikationsfenster sichtbar. Dabei weist die Verifikationshülse zumindest zwei Farbbereiche bzw. Farbabschnitte mit unterschiedlichen Farbtönen auf. Dies wird untenstehend noch näher erläutert.

Somit ist im Rahmen der Erfindung vorzugsweise im unfixierten Zustand und/oder im fixierten Zustand des männlichen Steckteils zumindest ein Teil der Verifikationshülse durch zumindest ein Verifikationsfenster sichtbar.

Es liegt im Rahmen der Erfindung, dass die zumindest eine Rückhalterausnehmung des weiblichen Steckteils das zumindest eine Verifikationsfenster bildet. Vorzugsweise bilden zwei sich gegenüberliegende, als Rückhalterschlitze ausgebildete Rückhalterausnehmungen des weiblichen Steckteils zwei solcher Verifikationsfenster. Es ist aber auch möglich, dass das weibliche Steckteil zumindest ein separates Verifikationsfenster in Form einer Ausnehmung, einer Bohrung oder dergleichen aufweist. Gemäß einer bevorzugten Ausführungsform des erfindungsgemäßen Verbinders ist das Verifikationsfenster als Teilbereich des weiblichen Steckteils ausgebildet, der aus zumindest einem transparenten Kunststoff besteht bzw. im Wesentlichen besteht.

Dem erfindungsgemäßen Verbinder mit zumindest einem Verifikationsfenster liegt die Erkenntnis zugrunde, dass durch das Verifikationsfenster die vorzugsweise farbig ausgebildete und sich insbesondere in ihrem Farbton von dem weiblichen Steckteil bzw. von den übrigen Verbinderkomponenten unterscheidende Verifikationshülse im unfixierten Zustand und/oder im fixierten Zustand des männlichen Steckteils sichtbar ist und somit anzeigt, wenn das männliche Steckteil ordnungsgemäß in dem weiblichen Steckteil fixiert ist. Dieser ordnungsgemäß fixierte Zustand des männlichen Steckteils wird funktionssicher und eindeutig angezeigt.

Es liegt auch im Rahmen der Erfindung, dass die Verifikationshülse zumindest zwei Farbbereiche bzw. Farbabschnitte mit unterschiedlichen Farbtönen aufweist, deren Farbton sich jeweils von dem Farbton der übrigen Verbinderkomponenten unterscheidet. Im Rahmen einer solchen Ausführungsform kann die Verifikationshülse beispielsweise einen ersten, in Einsteckrichtung des männlichen Steckteils vorderen farbigen Abschnitt aufweisen, der zweckmäßigerweise grünfarben ist. Empfohlenermaßen weist die Verifikationshülse dann einen zweiten farbigen Abschnitt auf, der in Einsteckrichtung des männlichen Steckteils hinter dem ersten farbigen Abschnitt angeordnet ist und vorzugsweise rotfarben ist. Im Rahmen einer solchen Ausführungsform ist die Verifikationshülse sowohl im unfixierten, als auch im fixierten Zustand des männlichen Steckteils durch das zumindest eine Verifikationsfenster sichtbar, wobei im unfixierten Zustand der eine Farbton, beispielsweise der rotfarbene Farbton, sichtbar ist und im fixierten Zustand des männlichen Steckteils der andere Farbton der Verifikationshülse, beispielsweise der grüne Farbton, sichtbar ist. Auf diese Weise wird der ordnungsgemäß fixierte Zustand des männlichen Steckteils an dem weiblichen Steckteil visuell sehr zuverlässig angezeigt und ist insbesondere schnell erkennbar. Selbstverständlich kann die Farbgebung der Verifikationshülse bei der Ausgestaltung mit zumindest zwei Farbbereichen auch andere Farben umfassen, solange die beiden Farbbereiche untereinander unterscheidbar sind und sich jeweils von dem Farbton des weiblichen Steckteils bzw. der übrigen Verbinderkomponenten unterscheiden.

Gemäß einer empfohlenen Ausführungsvariante des erfindungsgemäßen Verbinders weist die Verifikationshülse, insbesondere auf ihrer Außenoberfläche, einen Barcode und/oder einen QR-Code auf, der zweckmäßigerweise im ordnungsgemäß fixierten Zustand des männlichen Steckteils in zumindest einem Verifikationsfenster sichtbar ist.

Es ist bevorzugt, dass die Verifikationshülse an ihrer Außenoberfläche eine Blockierfläche zur Blockierung des Rückhalters im unfixierten Zustand des männlichen Steckteils aufweist. Die Blockierfläche ist insbesondere einstückig an die Verifikationshülse bzw. an die Komplementärschrägfläche angeformt und verläuft vorzugsweise parallel bzw. im Wesentlichen parallel zur Längsachse der Verifikationshülse. Die Blockierfläche umläuft den Umfang der Verifikationshülse vorzugsweise um zumindest 80 %, bevorzugt um zumindest 90 % und besonders bevorzugt vollständig. Die Blockierfläche der Verifikationshülse blockiert zweckmäßigerweise die zumindest eine Rückhalterausnehmung des weiblichen Steckteils und/oder den Rückhalter im unfixierten Zustand des männlichen Steckteils und verhindert so, dass der Rückhalter die Rückhalterausnehmungen durchgreift bzw. vollständig durchgreift. Beim Einsteckvorgang des männlichen Steckteils in das weibliche Steckteil wird die Verifikationshülse axial in Einsteckrichtung des männlichen Steckteils verschoben, sodass die Blockierfläche der Verifikationshülse die zumindest eine Rückhalterausnehmung und/oder den Rückhalter freigibt, sodass der Rückhalter das männliche Steckteil an dem weiblichen Steckteil fixiert.

Empfohlenermaßen weist das männliche Steckteil zumindest ein Zentrierelement auf, das im fixierten bzw. vollständig eingesteckten Zustand des männlichen Steckteils in eine Formschlussausnehmung des weiblichen Steckteils eingreift. Zweckmäßigerweise ragt das zumindest eine Zentrierelement aus der Außenoberfläche des männlichen Steckteils hervor und greift in eine Formschlussausnehmung an der Innenoberfläche der Steckausnehmung des weiblichen Steckteils ein. Gemäß bevorzugter Ausführungsform weist das männliche Steckteil an seiner Außenoberfläche zwei Zentrierelemente auf, die vorzugsweise gegenüberliegend an der Außenoberfläche des männlichen Steckteils angeordnet sind und bevorzugt in zwei komplementäre Formschlussausnehmungen an der Innenoberfläche der Steckausnehmung des weiblichen Steckteils eingreifen.

Es liegt in diesem Zusammenhang im Rahmen der Erfindung, dass die Verifikationshülse eine frontseitige Kontaktfläche aufweist, die mit einer Stirnfläche des zumindest einen an der Außenoberfläche des männlichen Steckteils angeformten Zentrierelementes beim Einstecken des männlichen Steckteils in das weibliche Steckteil wechselwirkt, sodass die Verifikationshülse axial in Einsteckrichtung verschoben wird und der Rückhalter freigegeben wird. Die frontseitige Kontaktfläche umläuft den Umfang der Verifikationshülse zweckmäßigerweise um zumindest 80 %, bevorzugt um zumindest 90 %. Gemäß einer Ausführungsform umläuft die frontseitige Kontaktfläche den Umfang der Verifikationshülse vollständig. Frontseitige Kontaktfläche der Verifikationshülse meint in diesem Zusammenhang die in Einsteckrichtung des männlichen Steckteils vorderste Fläche der Verifikationshülse. Es ist möglich, dass die Verifikationshülse zumindest eine frontseitige Ausnehmung in der frontseitigen Kontaktfläche aufweist, in die vorzugsweise das zumindest eine Zentrierelement eingreift. In diesem Zusammenhang kann das der zumindest einen frontseitigen Ausnehmung zugeordnete Zentrierelement so ausgebildet sein, dass es die Fixierungsnut des männlichen Steckteils übergreift.

Es liegt im Rahmen der Erfindung, dass die Verifikationshülse beim Einsteckvorgang des männlichen Steckteils in das weibliche Steckteil von der vorzugsweise an dem männlichen Steckteil angeordneten Schrägfläche und/oder von dem empfohlenermaßen an dem männlichen Steckteil vorgesehenen zumindest einen Zentrierelement axial in Einsteckrichtung verschoben wird, sodass der Rückhalter freigegeben wird.

Gemäß einer besonders bevorzugten Ausführungsform weist der Verbinder ein Dichtelement, insbesondere einen Dichtungsring auf, das vorzugsweise von einem Distanzring und/oder von der Verifikationshülse in dem Verbinder gehalten wird. Das Dichtelement bzw. der Dichtungsring ist vorzugsweise in dem weiblichen Steckteil angeordnet und ist bevorzugt im fixierten bzw. vollständig eingesteckten Zustand des männlichen Steckteils zwischen dem weiblichen Steckteil und dem männlichen Steckteil vorgesehen. Zweckmäßigerweise ist das Dichtelement ein über den Umfang des männlichen Steckteils umlaufender Dichtungsring bzw. O-Dichtungsring.

Es empfiehlt sich, dass im fixierten bzw. vollständig eingesteckten Zustand des männlichen Steckteils ein Distanzring zwischen dem männlichen Steckteil und dem weiblichen Steckteil angeordnet ist. Zweckmäßigerweise ist der Distanzring in Einsteckrichtung des männlichen Steckteils vor dem zumindest einen Dichtelement, bevorzugt vor dem zumindest einen Dichtungsring, angeordnet. Gemäß einer bevorzugten Ausführungsform der Erfindung ist der Distanzring mit dem weiblichen Steckteil verrastet. Der Distanzring hält das Dichtelement bzw. den Dichtungsring vorzugsweise in dem Verbinder bzw. in dem weiblichen Steckteil. Es liegt auch im Rahmen der Erfindung, dass die Verifikationshülse den Dichtungsring in dem weiblichen Steckteil hält.

Vorzugsweise ist die Verifikationshülse sowohl im unfixierten, als auch im fixierten Zustand des männlichen Steckteils in Einsteckrichtung des männlichen Steckteils vor dem Dichtelement bzw. Dichtungsring angeordnet und liegt zweckmäßigerweise im fixierten Zustand des männlichen Steckteils an dem Dichtelement bzw. Dichtungsring an und hält diesen bevorzugt so in dem Verbinder bzw. in dem weiblichen Steckteil. Es liegt im Rahmen der Erfindung dass die Verifikationshülse das Dichtelement bzw. den Dichtungsring und den Distanzring in dem weiblichen Steckteil hält. Es ist im Rahmen der Erfindung auch möglich, dass kein Distanzring in dem weiblichen Steckteil vorgesehen ist und dass das Dichtelement bzw. der Dichtungsring lediglich von der Verifikationshülse in dem weiblichen Steckteil gehalten wird und insbesondere durch Kontakt zwischen der Verifikationshülse und dem Dichtelement bzw. dem Dichtring in dem Verbinder bzw. in dem weiblichen Steckteil gehalten wird. Es ist möglich, dass der Distanzring einstückig an die Verifikationshülse angeformt ist.

Der Erfindung liegt die Erkenntnis zugrunde, dass mit dem erfindungsgemäßen Verbinder eine funktionssichere und korrekte Verbindung des männlichen Steckteils mit dem weiblichen Steckteil zuverlässig und eindeutig angezeigt wird, sodass auf diese Weise Verbindungsfehler nahezu vollständig vermieden werden können. Dabei kann mit der Verifikationshülse sowohl eine optische bzw. visuelle Verifikation der korrekten Fixierung des männlichen Steckteils an dem weiblichen Steckteil erfolgen, als auch eine haptische Verifikation durch die Freigabe des Rückhalters und dessen bevorzugtes Einschnappen durch die Rückhalterausnehmungen. Dies kann durch die vorzugsweise farbige Ausgestaltung der Verifikationshülse, die sich in ihrem Farbton insbesondere von den übrigen Verbinderkomponenten unterscheidet, verstärkt werden. Dabei ist die Anzeige des ordnungsgemäß fixierten Zustandes des männlichen Steckteils an dem weiblichen Steckteil sehr zuverlässig und störungsfrei möglich. Es ist weiterhin zu betonen, dass durch die erfindungsgemäße Verifikationshülse der Kraftaufwand beim Einstecken des männlichen Steckteils in das weibliche Steckteil erheblich verringert wird, da durch die Verifikationshülse gleichsam eine Vorspannung des Rückhalters erfolgt, sodass das männliche Steckteil beim Einsteckvorgang den Rückhalter nicht auseinanderdrücken muss. Somit ist sowohl eine einfache, als auch eine sehr zuverlässige und verlässlich verifizierbare Verbindung des männlichen Steckteils mit dem weiblichen Steckteil möglich. Vorteilhaft ist weiterhin, dass der erfindungsgemäße Verbinder mit verhältnismäßig geringem Fertigungsaufwand und mit geringen Fertigungskosten realisierbar ist, da die Verifikationshülse einfach aufgebaut ist und dennoch eine sehr zuverlässige Verifikation bzw. Anzeige der ordnungsgemäßen Verbindung ermöglicht. Zudem können die für derartige Verbinder einschlägigen Normen mit dem erfindungsgemäßen Verbinder und der erfindungsgemäßen Verifikationshülse problemlos eingehalten werden.

Nachfolgend wird die Erfindung anhand einer lediglich ein Ausführungsbeispiel darstellenden Zeichnung näher erläutert. Es zeigen in schematischer Darstellung:
- Fig. 1:: Den erfindungsgemäßen Verbinder in einer Explosionsdarstellung,
- Fig. 2:: einen Längsschnitt durch den erfindungsgemäßen Verbinder im unfixierten Zustand des männlichen Steckteils,
- Fig. 3:: den Gegenstand gemäß Fig. 2 im fixierten bzw. vollständig eingesteckten Zustand des männlichen Steckteils.

Die Figuren zeigen einen Verbinder 1 zum Verbinden zweier fluidführender Elemente, insbesondere zum Verbinden von zwei Kraftfahrzeugrohrleitungen 2, 3. Der Verbinder 1 weist ein weibliches Steckteil 4 und ein in das weibliche Steckteil 4 einsteckbares männliches Steckteil 5 auf. An den erfindungsgemäßen Verbinder 1 ist ein Rückhalter 6 angeschlossen, mit dem das männliche Steckteil 5 an dem weiblichen Steckteil 4 fixierbar ist. Bei dem in den Figuren dargestellten Verbinder 1 handelt es sich um einen sogenannten VDA-Verbinder.

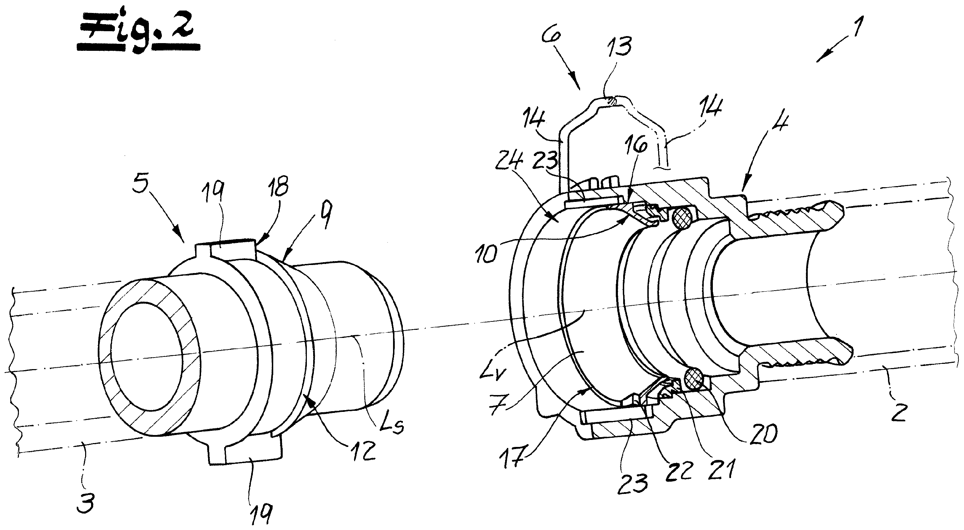

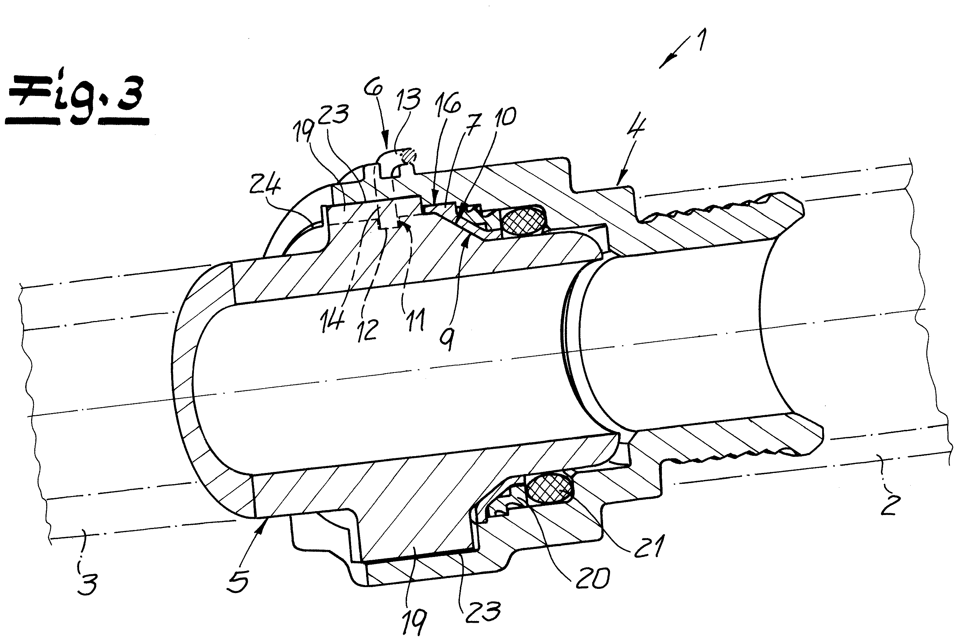

In dem unfixierten Zustand des männlichen Steckteils 5, der insbesondere in der Fig. 2 dargestellt ist, ist der Rückhalter 6 von einer in dem weiblichen Steckteil 4 vorgesehenen Verifikationshülse 7 blockiert. Beim Einstecken des männlichen Steckteils 5 in das weibliche Steckteil 4 wird die Verifikationshülse 7 axial in Einsteckrichtung verschoben, sodass der Rückhalter 6 freigegeben wird und das männliche Steckteil 5 an dem weiblichen Steckteil 4 fixiert. Der vollständig eingesteckte bzw. fixierte Zustand des männlichen Steckteils 5 an dem weiblichen Steckteil 4 ist in der Fig. 3 dargestellt.

Empfohlenermaßen ist das weibliche Steckteil 4 und das männliche Steckteil 5 aus zumindest einem Kunststoff hergestellt und bevorzugt besteht das männliche Steckteil 5 und das weibliche Steckteil 4 aus Polyphenylensulfid bzw. im Wesentlichen aus Polyphenylensulfid. Vorzugsweise besteht der Rückhalter 6 aus Stahl bzw. im Wesentlichen aus Stahl.

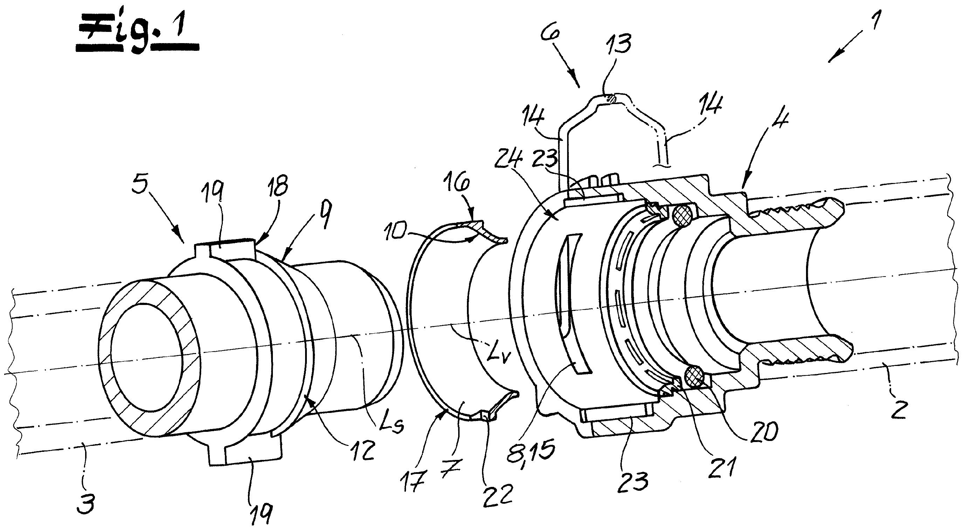

Zweckmäßigerweise und im Ausführungsbeispiel weist das weibliche Steckteil 4 zwei sich gegenüberliegende Rückhalterausnehmungen 8 auf, die als Rückhalterschlitze ausgebildet sind. Dies ist insbesondere in der Fig. 1 zu erkennen. Bevorzugt und im Ausführungsbeispiel sind die Rückhalterausnehmungen 8 im unfixierten Zustand (Fig. 2) des männlichen Steckteils 5 von der Verifikationshülse 7 blockiert. Im vollständig eingesteckten bzw. fixierten Zustand des männlichen Steckteils 5 (Fig. 3) durchgreift der Rückhalter 6 die beiden Rückhalterausnehmungen 8 bzw. durchgreift der Rückhalter 6 die Rückhalterausnehmungen 8 in diesem Zustand vollständig. Zweckmäßigerweise und im Ausführungsbeispiel ist der Rückhalter 6 in dem unfixierten Zustand des männlichen Steckteils 5 von der Verifikationshülse 7 gleichsam vorgespannt und schnappt nach der axialen Verschiebung der Verifikationshülse 7 in Einsteckrichtung beim Einsteckvorgang des männlichen Steckteils 5 die beiden Rückhalterausnehmungen 8 durchgreifend bzw. vollständig durchgreifend ein.

Zweckmäßigerweise und im Ausführungsbeispiel ist die Verifikationshülse 7 als einstückiges Kunststoffbauteil ausgebildet und ist bereichsweise bzw. abschnittsweise hohlzylindrisch und bereichsweise bzw. abschnittsweise kegelstumpfförmig ausgebildet, sodass sich die Verifikationshülse 7 empfohlenermaßen und im Ausführungsbeispiel bereichsweise bzw. abschnittsweise in Einsteckrichtung des männlichen Steckteils 5 verjüngt.

Im Rahmen der Erfindung und im Ausführungsbeispiel wird die Verifikationshülse 7 durch direkten Kontakt des männlichen Steckteils 5 mit der Verifikationshülse 7 axial in Einsteckrichtung verschoben und dabei wird empfohlenermaßen und im Ausführungsbeispiel das männliche Steckteil 5 zumindest bereichsweise in die Verifikationshülse 7 eingeschoben. Zweckmäßigerweise und im Ausführungsbeispiel gemäß den Figuren ist der direkte Kontakt zwischen dem männlichen Steckteil 5 und der Verifikationshülse 7 beim Einsteckvorgang mittels einer Schrägfläche 9 des männlichen Steckteils 5 vorgesehen, die beim Einsteckvorgang mit einer Komplementärschrägfläche 10 der Verifikationshülse 7 wechselwirkt bzw. an dieser angreift. Beim Einsteckvorgang des männlichen Steckteils 5 in das weibliche Steckteil 4 wird das männliche Steckteil 5 zunächst in eine Steckausnehmung 24 des weiblichen Steckteils 4 eingeführt. Anschließend wird vorzugsweise die Schrägfläche 9 an die Komplementärschrägfläche 10 der Verifikationshülse 7 herangeführt und zur Anlage gebracht, sodass die Schrägfläche 9 mit der Komplementärschrägfläche 10 wechselwirkt und die Verifikationshülse 7 dadurch axial in Einsteckrichtung verschiebt, sodass der Rückhalter 6 freigegeben wird.

Empfohlenermaßen und im Ausführungsbeispiel steigt die Schrägfläche 9 und die Komplementärschrägfläche 10 in axialer Richtung des männlichen Steckteils bzw. der Verifikationshülse 7 entgegen der Einsteckrichtung des männlichen Steckteils 5 an. Axiale Richtung des männlichen Steckteils 5 meint dabei insbesondere die Richtung der Längsachse Ls des männlichen Steckteils 5. Axiale Richtung der Verifikationshülse 7 meint dabei insbesondere die Richtung der die beiden Hülsenöffnungen durchlaufenden Längsachse bzw. Längsmittelachse Lv der Verifikationshülse 7. Es liegt im Rahmen der Erfindung, dass die Schrägfläche 9 und/oder die Komplementärschrägfläche 10 kontinuierlich und stufenfrei ansteigt und vorzugsweise um 15° bis 50° bezüglich der Längsachse des männlichen Steckteils 5 bzw. der Verifikationshülse 7 ansteigt. Im Ausführungsbeispiel gemäß den Figuren steigen die Schrägfläche 9 und die Komplementärschrägfläche 10 um etwa 30° entgegen der Einsteckrichtung des männlichen Steckteils 5 an. Empfohlenermaßen und im Ausführungsbeispiel ist der Anstiegswinkel der Schrägfläche 9 und der Komplementärschrägfläche 10 identisch bzw. im Wesentlichen identisch. Zweckmäßigerweise und im Ausführungsbeispiel läuft die Schrägfläche 9 über den gesamten Umfang des männlichen Steckteils 5 um.

Das männliche Steckteil 5 ist im fixierten bzw. vollständig eingesteckten Zustand über den Rückhalter 6 an dem weiblichen Steckteil 4 fixiert. Bei dem Rückhalter 6 handelt es sich bevorzugt und im Ausführungsbeispiel um einen U-förmigen Rückhalter. Der U-förmige Rückhalter 6 hintergreift im fixierten bzw. vollständig eingesteckten Zustand des männlichen Steckteils 5 vorzugsweise einen Anschlagflansch 11 des männlichen Steckteils 5 und greift besonders bevorzugt und im Ausführungsbeispiel in eine Fixierungsnut 12 des männlichen Steckteils 5 ein.

Vorzugsweise und im Ausführungsbeispiel gemäß den Figuren ist der U-förmige Rückhalter 6 mit einem U-Bügel 13 und zwei an dem U-Bügel 13 angeschlossenen U-Schenkeln 14 ausgeführt. Zweckmäßigerweise und im Ausführungsbeispiel durchgreifen die U-Schenkel 14 im vollständig eingesteckten bzw. fixierten Zustand des männlichen Steckteils 5 jeweils eine Rückhalterausnehmung 8 des weiblichen Steckteils 4 bzw. durchgreifen diese Rückhalterausnehmung 8 jeweils vollständig. Dabei hintergreifen die U-Schenkel 14 zweckmäßigerweise und im Ausführungsbeispiel gemäß den Figuren den Anschlagflansch 11 des männlichen Steckteils 5 und greifen insbesondere in die Fixierungsnut 12 des männlichen Steckteils 5 ein. In diesem Zustand (Fig. 3) ist das männliche Steckteil 5 vollständig beziehungsweise ordnungsgemäß an dem weiblichen Steckteil 4 fixiert.

Im Rahmen der Erfindung und im Ausführungsbeispiel ist im Übrigen der Anschlagflansch 11 in Einsteckrichtung des männlichen Steckteils 5 vor der Schrägfläche 9 angeordnet und insbesondere weist die Schrägflächenrückseite den Anschlagflansch 11 auf bzw. bildet den Anschlagflansch 11. Somit ist die Schrägfläche 9 empfohlenermaßen und im Ausführungsbeispiel einerseits zur Wechselwirkung mit bzw. zum Angriff an der Komplementärschrägfläche 10 der Verifikationshülse 7 vorgesehen und bildet andererseits auch den Anschlagflansch 11 für den Rückhalter 6 bzw. weist diesen Anschlagflansch 11 auf.

Es liegt im Rahmen der Erfindung, dass die Verifikationshülse 7 zumindest bereichsweise farbig ausgebildet ist und sich zweckmäßigerweise in ihrem Farbton von den übrigen Verbinderkomponenten - insbesondere von dem weiblichen Steckteil 4 - unterscheidet. Dies ist in den Figuren nicht näher dargestellt. Empfohlenermaßen und im Ausführungsbeispiel weist das weibliche Steckteil 4 zwei Verifikationsfenster 15 auf, durch die zumindest ein Teil der - insbesondere farbig ausgebildeten - Verifikationshülse 7 im unfixierten Zustand des männlichen Steckteils 5 sichtbar ist. Im Ausführungsbeispiel gemäß den Figuren bilden die Rückhalterausnehmungen 8 zwei solcher Verifikationsfenster 15. Im fixierten Zustand bzw. im vollständig eingesteckten Zustand des männlichen Steckteils 5 ist die Verifikationshülse 7 zweckmäßigerweise und im Ausführungsbeispiel durch die Verifikationsfenster 15 nicht mehr sichtbar bzw. im Wesentlichen nicht mehr sichtbar (Fig. 3).

Im Rahmen der Erfindung und im Ausführungsbeispiel weist die Verifikationshülse 7 an ihrer Außenoberfläche eine Blockierfläche 16 zur Blockierung des Rückhalters 6 im unfixierten Zustand des männlichen Steckteils 5 auf. Die Blockierfläche 16 ist vorzugsweise und im Ausführungsbeispiel einstückig an die Verifikationshülse 7 bzw. an die Komplementärschrägfläche 10 angeformt und verläuft bevorzugt parallel bzw. im Wesentlichen parallel zur Längsachse Lv der Verifikationshülse 7. Zweckmäßigerweise umläuft die Blockierfläche 16 den Umfang der Verifikationshülse 7 vollständig. Im unfixierten Zustand des männlichen Steckteils 5 (Fig. 2) blockiert die Blockierfläche 16 der Verifikationshülse 7 die Rückhalterausnehmungen 8 des weiblichen Steckteils 4 und den Rückhalter 6 und verhindert, dass der Rückhalter 6 die Rückhalterausnehmungen 8 vollständig durchgreift. Beim Einsteckvorgang des männlichen Steckteils 5 in die Steckausnehmung 24 des weiblichen Steckteils 4 wird die Verifikationshülse 7 zweckmäßigerweise dann axial in Einsteckrichtung des männlichen Steckteils 5 verschoben, sodass die Blockierfläche 16 der Verifikationshülse 7 die Rückhalterausnehmungen 8 und den Rückhalter 6 freigibt. Dann fixiert der Rückhalter 6 das männliche Steckteil 5 an dem weiblichen Steckteil 4 (Fig. 3).

Im Rahmen der Erfindung und im Ausführungsbeispiel weist das männliche Steckteil 5 zwei Zentrierelemente 19 auf, die im fixierten bzw. vollständig eingesteckten Zustand des männlichen Steckteils 5 in jeweils eine Formschlussausnehmung 23 des weiblichen Steckteils 4 eingreifen. Im Ausführungsbeispiel gemäß den Figuren ragen die Zentrierelemente 19 aus der Außenoberfläche des männlichen Steckteils 5 hervor und greifen in jeweils eine Formschlussausnehmung 23 an der Innenoberfläche der Steckausnehmung 24 des weiblichen Steckteils 4 ein. Die Zentrierelemente 19 sind dabei zweckmäßigerweise und im Ausführungsbeispiel gegenüberliegend an der Außenoberfläche des männlichen Steckteils 5 angeordnet und greifen bevorzugt in zwei komplementäre Formschlussausnehmungen 23 an der Innenoberfläche der Steckausnehmung 24 des weiblichen Steckteils 4 ein.

Vorzugsweise und im Ausführungsbeispiel weist die Verifikationshülse 7 eine frontseitige Kontaktfläche 17 auf, die mit einer Stirnfläche 18 eines beiden Zentrierelemente 19 beim Einstecken des männlichen Steckteils 5 in das weibliche Steckteil 4 wechselwirkt, sodass die Verifikationshülse 7 axial in Einsteckrichtung verschoben wird und der Rückhalter 6 freigegeben wird. Die Frontfläche 17 ist im Übrigen vorzugsweise und im Ausführungsbeispiel die in Einsteckrichtung des männlichen Steckteils 5 vorderste Fläche der Verifikationshülse 7. Im Rahmen der Erfindung und im Ausführungsbeispiel weist die Verifikationshülse 7 in der frontseitigen Kontaktfläche 17 eine frontseitige Ausnehmung 22 auf, in die eines der Zentrierelemente 19 eingreift. Dazu ist das der frontseitigen Ausnehmung 22 zugeordnete Zentrierelement (19) vorzugsweise und im Ausführungsbeispiel so ausgebildet, dass es die Fixierungsnut 12 des männlichen Steckteils 5 übergreift.

Beim Einsteckvorgang des männlichen Steckteils 5 in das weibliche Steckteil 4 wird in dem in den Figuren dargestellten Ausführungsbeispiel zweckmäßigerweise die Verifikationshülse 7 von der an dem männlichen Steckteil 5 angeordneten Schrägfläche 9 und von den beiden Zentrierelementen 19 axial in Einsteckrichtung verschoben, sodass der Rückhalter 6 freigegeben wird.

Die Figuren zeigen weiterhin, dass der Verbinder 1 einen Dichtungsring 20 als Dichtelement aufweist, der von einem Distanzring 21 in dem Verbinder 1 gehalten wird. Der Distanzring 21 ist im Rahmen der Erfindung und im Ausführungsbeispiel mit dem weiblichen Steckteil 4 verrastet.

## Patentansprüche

1. Verbinder (1) zum Verbinden zweier fluidführender Elemente, insbesondere zum Verbinden von zwei Kraftfahrzeugrohrleitungen (2, 3) mit einem weiblichen Steckteil (4) und einem in das weibliche Steckteil (4) einsteckbaren männlichen Steckteil (5), wobei an dem weiblichen Steckteil (4) ein Rückhalter (6) angeschlossen ist, mit dem das männliche Steckteil (5) an dem weiblichen Steckteil (4) fixierbar ist, wobei der Rückhalter (6) im unfixierten Zustand des männlichen Steckteils (5) von einer in dem weiblichen Steckteil (4) vorgesehenen Verifikationshülse (7) blockiert ist, wobei beim Einstecken des männlichen Steckteils (5) in das weibliche Steckteil (4) die Verifikationshülse (7) axial in Einsteckrichtung verschoben wird, sodass der Rückhalter (6) freigegeben wird und das männliche Steckteil (5) an dem weiblichen Steckteil (4) fixiert,
**dadurch gekennzeichnet, dass** das weibliche Steckteil (4) zumindest ein Verifikationsfenster (15) aufweist, durch das zumindest ein Teil der - insbesondere farbig ausgebildeten - Verifikationshülse (7) im unfixierten Zustand des männlichen Steckteils (5) sichtbar ist und wobei die Verifikationshülse (7) im fixierten Zustand bzw. im vollständig eingesteckten Zustand des männlichen Steckteils (5) durch das Verifikationsfenster (15) nicht mehr sichtbar ist bzw. im Wesentlichen nicht mehr sichtbar ist.

2. Verbinder (1) zum Verbinden zweier fluidführender Elemente, insbesondere zum Verbinden von zwei Kraftfahrzeugrohrleitungen (2, 3) mit einem weiblichen Steckteil (4) und einem in das weibliche Steckteil (4) einsteckbaren männlichen Steckteil (5), wobei an dem weiblichen Steckteil (4) ein Rückhalter (6) angeschlossen ist, mit dem das männliche Steckteil (5) an dem weiblichen Steckteil (4) fixierbar ist, wobei der Rückhalter (6) im unfixierten Zustand des männlichen Steckteils (5) von einer in dem weiblichen Steckteil (4) vorgesehenen Verifikationshülse (7) blockiert ist, wobei beim Einstecken des männlichen Steckteils (5) in das weibliche Steckteil (4) die Verifikationshülse (7) axial in Einsteckrichtung verschoben wird, sodass der Rückhalter (6) freigegeben wird und das männliche Steckteil (5) an dem weiblichen Steckteil (4) fixiert,
**dadurch gekennzeichnet, dass** das weibliche Steckteil (4) zumindest ein Verifikationsfenster (15) aufweist, durch das die - insbesondere farbig ausgebildete - Verifikationshülse (7) im unfixierten Zustand des männlichen Steckteils (5) noch nicht sichtbar ist bzw. im Wesentlichen noch nicht sichtbar ist und wobei zumindest ein Teil der Verifikationshülse (7) im fixierten Zustand bzw. im vollständig eingesteckten Zustand des männlichen Steckteils (5) durch das Verifikationsfenster (15) sichtbar ist.

3. Verbinder (1) zum Verbinden zweier fluidführender Elemente, insbesondere zum Verbinden von zwei Kraftfahrzeugrohrleitungen (2, 3) mit einem weiblichen Steckteil (4) und einem in das weibliche Steckteil (4) einsteckbaren männlichen Steckteil (5), wobei an dem weiblichen Steckteil (4) ein Rückhalter (6) angeschlossen ist, mit dem das männliche Steckteil (5) an dem weiblichen Steckteil (4) fixierbar ist, wobei der Rückhalter (6) im unfixierten Zustand des männlichen Steckteils (5) von einer in dem weiblichen Steckteil (4) vorgesehenen Verifikationshülse (7) blockiert ist, wobei beim Einstecken des männlichen Steckteils (5) in das weibliche Steckteil (4) die Verifikationshülse (7) axial in Einsteckrichtung verschoben wird, sodass der Rückhalter (6) freigegeben wird und das männliche Steckteil (5) an dem weiblichen Steckteil (4) fixiert,
**dadurch gekennzeichnet, dass** das weibliche Steckteil (4) zumindest ein Verifikationsfenster (15) aufweist, durch das zumindest ein Teil der Verifikationshülse (7) im unfixierten Zustand des männlichen Steckteils (5) sichtbar ist und wobei im fixierten Zustand bzw. im vollständig eingesteckten Zustand des männlichen Steckteils (5) ebenfalls zumindest ein Teil bzw. ein anderer Teil der Verifikationshülse (7) durch das Verifikationsfenster (15) sichtbar ist und wobei die Verifikationshülse (7) dabei zumindest zwei Farbbereiche bzw. Farbabschnitte mit unterschiedlichen Farbtönen aufweist.

4. Verbinder nach einem der Ansprüche 1 bis 3, wobei das weibliche Steckteil (4) zumindest eine Rückhalterausnehmung (8) aufweist, die im unfixierten Zustand des männlichen Steckteils (5) von der Verifikationshülse (7) blockiert ist und wobei der Rückhalter (6) im vollständig eingesteckten bzw. fixierten Zustand des männlichen Steckteils (5) die zumindest eine Rückhalterausnehmung (8) durchgreift bzw. vollständig durchgreift.

5. Verbinder nach einem der Ansprüche 1 bis 4, wobei die Verifikationshülse (7) durch direkten Kontakt des männlichen Steckteils (5) mit der Verifikationshülse (7) axial in Einsteckrichtung verschiebbar ist und wobei dabei vorzugsweise das männliche Steckteil (5) zumindest bereichsweise bzw. abschnittsweise in die Verifikationshülse (7) eingeschoben wird.

6. Verbinder nach einem der Ansprüche 1 bis 5, wobei das männliche Steckteil (5) eine Schrägfläche (9) aufweist, die beim Einsteckvorgang mit einer Komplementärschrägfläche (10) der Verifikationshülse (7) wechselwirkt bzw. an dieser angreift und die Verifikationshülse (7) dadurch axial in Einsteckrichtung verschiebt, sodass der Rückhalter (6) freigegeben wird.

7. Verbinder nach Anspruch 6, wobei die Schrägfläche (9) an der Außenseite des männlichen Steckteils (5) angeordnet ist und vorzugsweise einstückig an dem männlichen Steckteil (5) angeformt ist und/oder wobei die Komplementärschrägfläche (10) zumindest bereichsweise bzw. abschnittsweise die Innenoberfläche der Verifikationshülse (7) bildet.

8. Verbinder nach einem der Ansprüche 6 oder 7, wobei die Schrägfläche (9) und/oder die Komplementärschrägfläche (10) in axialer Richtung des männlichen Steckteils (5) bzw. der Verifikationshülse (7) ansteigt und vorzugsweise entgegen der Einsteckrichtung des männlichen Steckteils (5) ansteigt.

9. Verbinder nach einem der Ansprüche 1 bis 8, wobei der Rückhalter (6) im vollständig eingesteckten bzw. fixierten Zustand des männlichen Steckteils (5) einen Anschlagflansch (11) des männlichen Steckteils (5) hintergreift und vorzugsweise in eine Fixierungsnut (12) des männlichen Steckteils (5) eingreift.

10. Verbinder nach einem der Ansprüche 1 bis 9, wobei der Rückhalter (6) U-förmig mit einem U-Bügel (13) und zwei an dem U-Bügel (13) angeschlossenen U-Schenkeln (14) ausgeführt ist, wobei im vollständig eingesteckten bzw. fixierten Zustand des männlichen Steckteils (5) vorzugsweise die U-Schenkel (14) jeweils eine Rückhalterausnehmung (8) des weiblichen Steckteils (4) durchgreifen bzw. vollständig durchgreifen und bevorzugt den Anschlagflansch (11) des männlichen Steckteils (5) hintergreifen wobei sie besonders bevorzugt in die Fixierungsnut (12) des männlichen Steckteils (5) eingreifen.

11. Verbinder nach einem der Ansprüche 1 bis 10, wobei die Verifikationshülse (7) zumindest bereichsweise bzw. abschnittsweise farbig ausgebildet ist und sich vorzugsweise in ihrem Farbton von den übrigen Verbinderkomponenten - insbesondere von dem weiblichen Steckteil (14) - unterscheidet.

12. Verbinder nach einem der Ansprüche 1 bis 11, wobei das weibliche Steckteil (4) zumindest ein Verifikationsfenster (15) aufweist, und wobei die Verifikationshülse (7), insbesondere auf ihrer Außenoberfläche, vorzugsweise einen Barcode und/oder einen QR-Code aufweist, der im ordnungsgemäß fixierten Zustand des männlichen Steckteils (5) in dem Verifikationsfenster (15) sichtbar ist.

13. Verbinder nach einem der Ansprüche 1 bis 12, wobei die Verifikationshülse (7) an ihrer Außenoberfläche eine Blockierfläche (16) zur Blockierung des Rückhalters (6) im unfixierten Zustand des männlichen Steckteils (5) aufweist, wobei die Blockierfläche (16) insbesondere einstückig an die Verifikationshülse (7) bzw. an die Komplementärschrägfläche (10) angeformt ist und wobei die Blockierfläche (16) vorzugsweise parallel bzw. im Wesentlichen parallel zur Längsachse der Verifikationshülse (7) verläuft.

14. Verbinder nach einem der Ansprüche 1 bis 13, wobei die Verifikationshülse (7) eine frontseitige Kontaktfläche (17) aufweist, die mit einer Stirnfläche (18) zumindest eines an der Außenoberfläche des männlichen Steckteils (5) angeformten Zentrierelementes (19) beim Einstecken des männlichen Steckteils (5) in das weibliche Steckteil (4) wechselwirkt, sodass die Verifikationshülse (7) axial in Einsteckrichtung verschoben wird und der Rückhalter (6) freigegeben wird.

## Claims

1. A connector (1) for connecting two fluid-carrying elements, in particular for connecting two motor vehicle pipelines (2, 3) with a female plug part (4) and a male plug part (5) that can be inserted into the female plug part (4), wherein a retainer (6) is connected to the female plug part (4), and can be used to fix the male plug part (5) to the female plug part (4), wherein the retainer (6) is blocked by a verification sleeve (7) provided in the female plug part (4) in the unfixed state of the male plug part (5), wherein, during insertion of the male plug part (5) into the female plug part (4), the verification sleeve (7) is axially displaced in the insertion direction, so that the retainer (6) is released and fixes the male plug part (5) to the female plug part (4),
**characterized in that** the female plug part (4) has at least one verification window (15), through which at least a portion of the-in particular colored-verification sleeve (7) is visible in the unfixed state of the male plug part (5), and wherein the verification sleeve (7) is no longer visible or essentially no longer visible through the verification window (15) in the fixed state or in the completely inserted state of the male plug part (5).

2. A connector (1) for connecting two fluid-carrying elements, in particular for connecting two motor vehicle pipelines (2, 3) with a female plug part (4) and a male plug part (5) that can be inserted into the female plug part (4), wherein a retainer (6) is connected to the female plug part (4), and can be used to fix the male plug part (5) to the female plug part (4), wherein the retainer (6) is blocked by a verification sleeve (7) provided in the female plug part (4) in the unfixed state of the male plug part (5), wherein, during insertion of the male plug part (5) into the female plug part (4), the verification sleeve (7) is axially displaced in the insertion direction, so that the retainer (6) is released and fixes the male plug part (5) to the female plug part (4),
**characterized in that** the female plug part (4) has at least one verification window (15), through which the-in particular colored-verification sleeve (7) is not yet visible or essentially not yet visible in the unfixed state of the male plug part (5), and wherein at least a portion of the verification sleeve (7) is visible through the verification window (15) in the fixed state or in the completely inserted state of the male plug part (5).

3. A connector (1) for connecting two fluid-carrying elements, in particular for connecting two motor vehicle pipelines (2, 3) with a female plug part (4) and a male plug part (5) that can be inserted into the female plug part (4), wherein a retainer (6) is connected to the female plug part (4), and can be used to fix the male plug part (5) to the female plug part (4), wherein the retainer (6) is blocked by a verification sleeve (7) provided in the female plug part (4) in the unfixed state of the male plug part (5), wherein, during insertion of the male plug part (5) into the female plug part (4), the verification sleeve (7) is axially displaced in the insertion direction, so that the retainer (6) is released and fixes the male plug part (5) to the female plug part (4),
**characterized in that** the female plug part (4) has at least one verification window (15), through which at least a portion of the verification sleeve (7) is visible in the unfixed state of the male plug part (5), and wherein at least a portion or another portion of the verification sleeve (7) is likewise visible through the verification window (15) in the fixed state or in the completely inserted state of the male plug part (5), and wherein the verification sleeve (7) here has at least two color ranges or color sections with different color shades.

4. The connector according to one of claims 1 to 3, wherein the female plug part (4) has at least one retainer recess (8), which is blocked by the verification sleeve (7) in the unfixed state of the male plug part (5), and wherein the retainer (6) engages through or completely engages through the at least one retainer recess (8) in the completely inserted or fixed state of the male plug part (5).

5. The connector according to one of claims 1 to 4, wherein the verification sleeve (7) can be axially displaced in the insertion direction through direct contact between the male plug part (5) and the verification sleeve (7), and wherein the male plug part (5) is preferably at least regionally or sectionally inserted into the verification sleeve (7).

6. The connector according to one of claims 1 to 5, wherein the male plug part (5) has a slanted surface (9), which during the insertion process interacts with a complementary slanted surface (10) of the verification sleeve (7) or acts on the latter, and thereby axially displaces the verification sleeve (7) in the insertion direction, so that the retainer (6) is released.

7. The connector according to claim 6, wherein the slanted surface (9) is arranged on the exterior of the male plug part (5), and preferably formed in one piece on the male plug part (5) and/or wherein the complementary slanted surface (10) at least regionally or sectionally forms the inside surface of the verification sleeve (7) .

8. The connector according to one of claims 6 or 7, wherein the slanted surface (9) and/or the complementary slanted surface (10) rises in an axial direction of the male plug part (5) or the verification sleeve (7), and preferably rises opposite the insertion direction of the male plug part (5).

9. The connector according to one of claims 1 to 8, wherein, in the completely inserted or fixed state of the male plug part (5), the retainer (6) engages behind a stop flange (11) of the male plug part (5), and preferably engages into a fixation groove (12) of the male plug part (5).

10. The connector according to one of claims 1 to 9, wherein the retainer (6) has a U-shaped design with a U-bracket (13) and two U-legs (14) connected to the U-bracket (13), wherein, in the completely inserted or fixed state of the male plug part (5), the U-legs (14) each engage through or completely engage through a respective retainer recess (8) of the female plug part (4), and preferably engage behind the stop flange (11) of the male plug part (5), wherein they especially preferably engage into the fixation groove (12) of the male plug part (5).

11. The connector according to one of claims 1 to 10, wherein the verification sleeve (7) is at least regionally or sectionally colored in design, and preferably differs in terms of its color shade from the remaining connector components-in particular from the female plug part (14).

12. The connector according to one of claims 1 to 11, wherein the female plug part (4) has at least one verification window (15), and wherein the verification sleeve (7), in particular on its exterior surface, preferably has a barcode and/or a QR code, which is visible in the verification window (15) with the male plug part (5) in the properly fixed state.

13. The connector according to one of claims 1 to 12, wherein the verification sleeve (7) has a blocking surface (16) on its exterior surface for blocking the retainer (6) in the unfixed state of the male plug part (5), wherein the blocking surface (16) in particular is formed in one piece on the verification sleeve (7) or on the complementary slanted surface (10), and wherein the blocking surface (16) preferably runs parallel or essentially parallel to the longitudinal axis of the verification sleeve (7).

14. The connector according to one of claims 1 to 13, wherein the verification sleeve (7) has a front-side contact surface (17), which interacts with a front face (18) of at least one centering element (19) molded onto the exterior surface of the male plug part (5) during insertion of the male plug part (5) into the female plug part (4), so that the verification sleeve (7) is axially displaced in the insertion direction, and the retainer (6) is released.

## Revendications

1. Raccord (1) pour relier deux éléments conducteurs de fluide, en particulier pour relier deux conduits de véhicule automobile (2, 3), avec une partie insérable femelle (4) et une partie insérable mâle (5) insérable dans la partie insérable femelle (4), sachant qu'un élément de retenue (6) est raccordé à la partie insérable femelle (4) avec lequel la partie insérable mâle (5) peut être fixée à la partie insérable femelle (4), sachant que l'élément de retenue (6) à l'état non fixé de la partie insérable mâle (5) est bloqué par un manchon de vérification (7) prévu dans la partie insérable femelle (4), sachant que lors de l'insertion de la partie insérable mâle (5) dans la partie insérable femelle (4), le manchon de vérification (7) est axialement déplacé en direction d'insertion de telle manière que l'élément de retenue (6) est libéré et fixe la partie insérable mâle (5) à la partie insérable femelle (4),
**caractérisé en ce que** la partie insérable femelle (4) comporte au moins une fenêtre de vérification (15), à travers laquelle au moins une partie (en particulier constituée en couleurs) du manchon de vérification (7) est visible à l'état non fixé de la partie insérable mâle (5) et sachant que le manchon de vérification (7) à l'état fixé ou à l'état complètement inséré de la partie insérable mâle (5) n'est plus visible ou n'est pour l'essentiel plus visible à travers la fenêtre de vérification (15).

2. Raccord (1) pour relier deux éléments conducteurs de fluide, en particulier pour relier deux conduits de véhicule automobile (2, 3) avec une partie insérable femelle (4) et une partie insérable mâle (5) insérable dans la partie insérable femelle (4), sachant qu'un élément de retenue (6) est raccordé à la partie insérable femelle (4) avec lequel la partie insérable mâle (5) peut être fixée à la partie insérable femelle (4), sachant que l'élément de retenue (6) à l'état non fixé de la partie insérable mâle (5) est bloqué par un manchon de vérification (7) prévu dans la partie insérable femelle (4), sachant que lors de l'insertion de la partie insérable mâle (5) dans la partie insérable femelle (4), le manchon de vérification (7) est axialement déplacé en direction d'insertion de telle manière que l'élément de retenue (6) est libéré et fixe la partie insérable mâle (5) à la partie insérable femelle (4),
**caractérisé en ce que** la partie insérable femelle (4) comporte au moins une fenêtre de vérification (15), à travers laquelle (en particulier constituée en couleurs) le manchon de vérification (7) n'est pas encore visible ou n'est pour l'essentiel pas encore visible à l'état non fixé de la partie insérable mâle (5) et sachant qu'au moins une partie du manchon de vérification (7) à l'état fixé ou à l'état complètement inséré de la partie insérable mâle (5) est visible à travers la fenêtre de vérification (15).

3. Raccord (1) pour relier deux éléments conducteurs de fluide, en particulier pour relier deux conduits de véhicule automobile (2, 3), avec une partie insérable femelle (4) et une partie insérable mâle (5) insérable dans la partie insérable femelle (4), sachant qu'un élément de retenue (6) est raccordé à la partie insérable femelle (4) avec lequel la partie insérable mâle (5) peut être fixée à la partie insérable femelle (4), sachant que l'élément de retenue (6) à l'état non fixé de la partie insérable mâle (5) est bloqué par un manchon de vérification (7) prévu dans la partie insérable femelle (4), sachant que lors de l'insertion de la partie insérable mâle (5) dans la partie insérable femelle (4), le manchon de vérification (7) est axialement déplacé en direction d'insertion de telle manière que l'élément de retenue (6) est libéré et fixe la partie insérable mâle (5) à la partie insérable femelle (4),
**caractérisé en ce que** la partie insérable femelle (4) comporte au moins une fenêtre de vérification (15), à travers laquelle au moins une partie du manchon de vérification (7) est visible à l'état non fixé de la partie insérable mâle (5) et sachant qu'à l'état fixé ou à l'état complètement inséré de la partie insérable mâle (5) également au moins une partie ou une autre partie du manchon de vérification (7) est visible à travers la fenêtre de vérification (15) et sachant que le manchon de vérification (7) comporte à cet effet au moins deux zones de couleur ou sections de couleur avec des nuances différentes.

4. Raccord selon l'une quelconque des revendications 1 à 3, sachant que la partie insérable femelle (4) comporte au moins un évidement d'élément de retenue (8), qui est bloqué à l'état non fixé de la partie insérable mâle (5) par le manchon de vérification (7) et sachant que l'élément de retenue (6) à l'état complètement inséré ou fixé de la partie insérable mâle (5) traverse au moins un évidement d'élément de retenue (8) ou traverse complètement.

5. Raccord selon l'une quelconque des revendications 1 à 4, sachant que le manchon de vérification (7) peut être axialement déplacé en direction d'insertion par contact direct de la partie insérable mâle (5) avec le manchon de vérification (7) et sachant qu'à cet effet la partie insérable mâle (5) est de préférence glissée au moins par zone ou en partie dans le manchon de vérification (7) .

6. Raccord selon l'une quelconque des revendications 1 à 5, sachant que la partie insérable mâle (5) comporte une surface oblique (9), qui interagit lors de l'opération d'insertion avec une surface oblique complémentaire (10) du manchon de vérification (7) ou vient en prise sur celle-ci et déplace de ce fait le manchon de vérification (7) axialement en direction d'insertion de telle manière que l'élément de retenue (6) est libéré.

7. Raccord selon la revendication 6, sachant que la surface oblique (9) est disposée sur le côté extérieur de la partie insérable mâle (5) et est de préférence conformée en une pièce sur la partie insérable mâle (5) et/ou sachant que la surface oblique complémentaire (10) forme au moins par zone ou en partie la surface intérieure du manchon de vérification (7).

8. Raccord selon l'une quelconque des revendications 6 ou 7, sachant que la surface oblique (9) et/ou la surface oblique complémentaire (10) augmente en direction axiale de la partie insérable mâle (5) ou du manchon de vérification (7) et augmente de préférence en sens contraire à la direction d'insertion de la partie insérable mâle (5).

9. Raccord selon l'une quelconque des revendications 1 à 8, sachant que l'élément de retenue (6) à l'état complètement inséré ou fixé de la partie insérable mâle (5) vient en prise par l'arrière avec une bride de butée (11) de la partie insérable mâle (5) et vient en prise de préférence dans une rainure de fixation (12) de la partie insérable mâle (5).

10. Raccord selon l'une quelconque des revendications 1 à 9, sachant que l'élément de retenue (6) est exécuté en forme de U avec un étrier en U (13) et deux branches en U (14) raccordées à l'étrier en U (13), sachant qu'à l'état complètement inséré ou fixé de la partie insérable mâle (5), de préférence les branches en U (14) traversent respectivement ou traversent complètement un évidement d'élément de retenue (8) de la partie insérable femelle (4) et viennent en prise par l'arrière de préférence avec la bride de butée (11) de la partie insérable mâle (5), sachant qu'elles viennent en prise en particulier de préférence dans la rainure de fixation (12) de la partie insérable mâle (5) .

11. Raccord selon l'une quelconque des revendications 1 à 10, sachant que le manchon de vérification (7) est constitué au moins par zone ou en partie en couleurs et se différencie de préférence dans sa nuance des autres composants de raccord, en particulier de la partie insérable femelle (14).

12. Raccord selon l'une quelconque des revendications 1 à 11, sachant que la partie insérable femelle (4) comporte au moins une fenêtre de vérification (15) et sachant que le manchon de vérification (7) comporte en particulier sur sa surface extérieure, de préférence un code à barres et/ou un code QR, qui est visible à l'état conformément fixé de la partie insérable mâle (5) dans la fenêtre de vérification (15).

13. Raccord selon l'une quelconque des revendications 1 à 12, sachant que le manchon de vérification (7) comporte sur sa surface extérieure, une surface de blocage (16) pour bloquer l'élément de retenue (6) à l'état non fixé de la partie insérable mâle (5), sachant que la surface de blocage (16) est conformée en particulier en une pièce sur le manchon de vérification (7) ou sur la surface oblique complémentaire (10) et sachant que la surface de blocage (16) passe de préférence parallèlement ou pour l'essentiel parallèlement à l'axe longitudinal du manchon de vérification (7).

14. Raccord selon l'une quelconque des revendications 1 à 13, sachant que le manchon de vérification (7) comporte une surface de contact frontale (17) qui interagit avec une surface avant (18) au moins d'un élément de centrage (19) conformé sur la surface extérieure de la partie insérable mâle (5) lors de l'insertion de la partie insérable mâle (5) dans la partie insérable femelle (4) de telle manière que le manchon de vérification (7) est déplacé axialement en direction d'insertion et l'élément de retenue (6) est libéré.
